# EUROPEAN PATENT APPLICATION

(11) **EP 1 300 751 A1**
(43) Date of publication of application: **09.04.2003**
(21) Application number: 01904321.5
(22) Date of filing: 02.02.2001
(51) Int. Cl.: G06F 3/033, G05G 9/047, G01B 7/30, G06K 11/18

(54) **LEVER TYPE OPERATING DEVICE**

(30) Priority: 02.02.2000 JP 2000025141
(71) Applicant: Next Corporation, Tsuyama-shi, Okayama 708-0000 (JP)
(72) Inventor: SAKO, Hidetoshi, Tsuyama-shi Okayama 708-0000 (JP)
(74) Representative: Lamb, Martin John Carstairs
(86) International application number: JP0100783
(87) International publication number: WO01057639

(57) **Abstract**

A joystick is simplified in construction to improve durability. A lever (2) is fixed to a spherical or cylindrical magnet (1), which is also used as a lever fulcrum by being turnably supported, and a magnetic sensor (5) is disposed close to the surface of the magnet, wherein the inclination of the lever is detected by a change in the intensity of the magnetic field on the magnet surface due to spacing from the magnetic pole, the detection output being used as an operating signal.

## Description

### TECHNICAL FIELD

The present invention relates to a lever type operating device, such as joysticks used for operating a computer. The present invention is intended to encompass a lever type operating device for one-dimensional operations in addition to two-dimensional operations as in joysticks.

### BACKGROUND ART

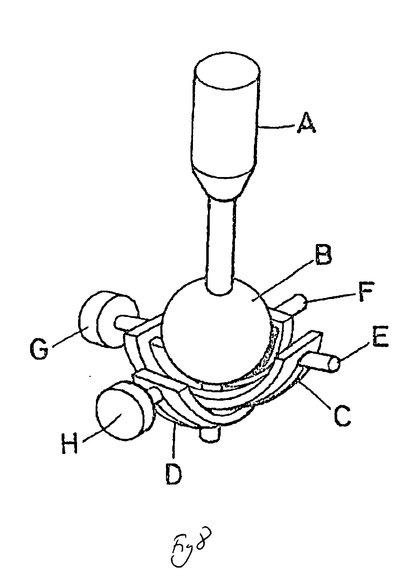

A conventional joystick employs a slide resistor, as shown in Fig. 8. In this figure, an operating lever A is supported by a single spherical body B so as to be inclined freely in any direction. The lever A penetrates the spherical body B, and the lower end of the lever A is engaged with a pair of swing links C, D. The swing links C, D are supported by shafts E, F, respectively. The shafts E, F are orthogonally arranged each other to allow both the circular-arc centers of the swing links to match with the center of the spherical body B. Thus, the swing links C, D can swing about the center of the spherical body B. Each of the shafts E, F is coupled with a corresponding control shaft of a slide-type resistors G, H. According to this structure, each control signal in the x-direction and the y-direction is output from the corresponding slide resistor G, H by changing the inclination of the lever A.

The above conventional joystick is complex in mechanism and hardly downsized due to the swing links orthogonal to each other. The slide resistors also take up space and make it difficult to downsize the operating mechanism. Further, the mechanism based on the slide resistors has low durability and tends to generate noise due to abrasion arising from the slide resistors. Thus, it is difficult to assure sufficient reliability required for an operating device.

### DISCLOSURE OF INVENTION

In view of the above circumstance, it is an object of the present invention to provide a lever type operating device having a simplified mechanism without using any slide resistor and capable of facilitating desirable downsizing and providing high reliability with sufficient durability and low noise yielded by eliminating the slide resistor.

For this purpose, in the present invention, a spherical or cylindrical magnetic body is magnetized in one of the diametrical directions thereof, and an operating lever is attached to the magnetized body. The spherical or cylindrical body is rotatably supported by a spherical or cylindrical bearing seat. In case of the spherical body, a pair of magnetic sensors are fixedly disposed facing the surface on the equator of the spherical body with defining an inner angle of 90-degree therebetween with respect to the center of the spherical body. And control signals in the x-direction and the y-direction are output from the magnetic sensors. In case of the cylindrical body, a single magnetic sensor is fixedly disposed facing the surface of the cylindrical body to output a control signal in one direction.

### BRIEF DESCRIPTION OF DRAWINGS

Fig 1 is an explanatory diagram of a principle of the present invention.
Fig. 2 is a graph showing a measurement result of the magnetic field intensity on the surface of a spherical magnet.
Fig. 3 illustrates one embodiment of the present invention, wherein Fig. 3 (A) is a vertical sectional view, Fig. 3 (B) being a plan view (wherein a bearing cap 4 is removed), and Fig. 3 (C) being a left side view.
Fig. 4 is a vertical sectional view of another embodiment of the present invention.
Fig. 5 is a vertical sectional view of still another embodiment of the present invention.
Fig. 6 illustrates yet another embodiment, wherein Fig. 6 (A) is a vertical sectional view, and Fig. 6 (B) is an exploded perspective view.
Fig. 7 is an exploded perspective view showing a one-dimensional embodiment of the present invention.
Fig. 8 is a perspective view of a conventional example.
Fig. 9 is a graph showing the relationship between magnetic field intensity and angle in case that both the magnetic pole regions of a spherical magnet are flattened.

### BEST MODE FOR CARRYING OUT THE INVENTION

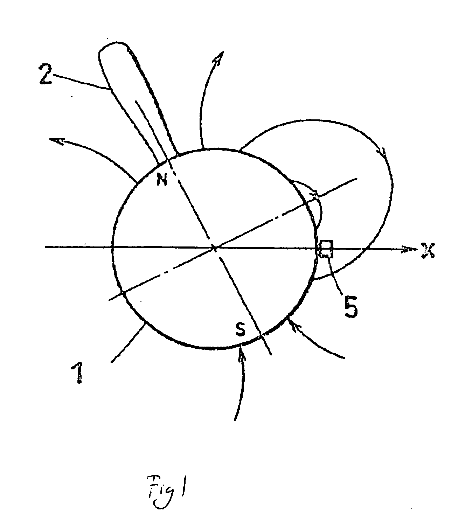

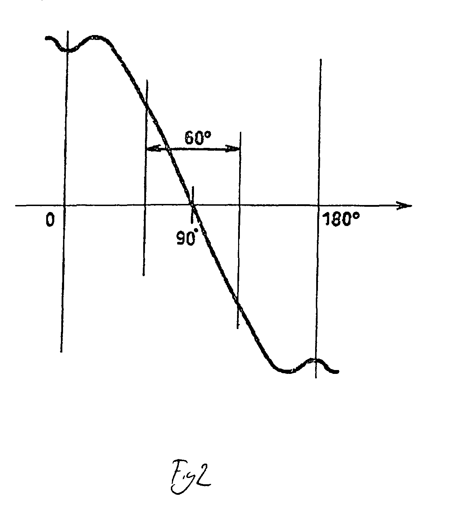

Fig. 1 shows a principle of an operating device of the present invention. A lever 2 is attached to a magnetized spherical body 1 serving as a magnet with penetrating therethrough. The spherical body 1 is magnetized in the axial direction of the lever. The magnetic force lines generated from the spherical magnet 1 are shown in the figure. Specifically, in the magnetic field on the surface of the spherical body, the component perpendicular to the surface has the highest intensity on both magnetic poles of the spherical body. The intensity of the magnetic field decreases as getting close to the equator of the spherical body, and becomes zero on the equator. After going over the equator, the intensity inversely increase. Further, the operation device is arranged such that both signals in the x-direction and y-direction become zero when the lever 2 attached to the spherical body 1 is located at a vertical or upright position. That is, in this position, a magnetic sensor 5 is disposed on an extension of the equatorial plane of the spherical body 1 and facing the surface of the spherical body 1 to provide a signal in response to the intensity of the magnetic field component perpendicular to the surface of the spherical body. When the lever is inclined, the magnetic sensor 5 gets close to either one of the magnetic poles of the spherical body, and thereby a signal as shown in Fig. 2 is output according to the inclination with respect to the upright position of the lever 2. This signal curve has a shape as sort of a sine function. When the lever is inclined approximately to a horizontal position, the curve has two peaks in the maximum value zone under the influence of a hole for inserting the lever thereinto. However, the curve is substantially linearly changed over a range of about 60 degrees (±30 degrees) around zero point of the inclination of the lever. While the above description has been given based on the spherical body, the same can be applied to the cylindrical body. The present invention is constructed with focusing on this point. Specifically, a pair of magnetic sensors are disposed with defining an inner angle of 90-degree therebetween with respect to the center of the spherical body 1 so as to pick up both x-direction and y-direction components from a single inclining movement of the lever 2 to output respective control signals.

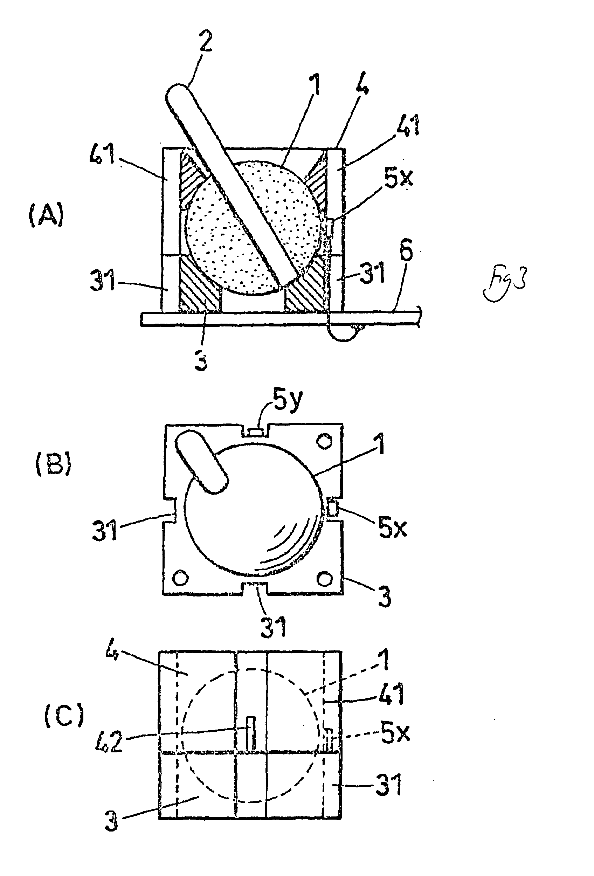

Fig. 3 shows a case in which the present invention is applied to a joystick for two-dimensional operations. The reference numeral 1 indicates a magnet formed by molding a magnetic plastic material in a spherical shape. A through-hole 2 is perforated along one of the diametrical directions of the magnet, and a lever 2 is inserted into the through-hole. The magnet may be magnetized either before or after making the through-hole. A hole to be provided in the magnet does not have to be a through-hole because such a hole is necessary only for inserting the lever thereinto. However, if the hole does not penetrate the magnet, respective magnetic poles of the magnet will have different magnetized states and consequently it will be difficult to obtain the symmetrical magnetic force distribution along the meridian on the surface of the spherical body as in Fig. 2. Thus, it is desirable to provide a through-hole.

The reference numeral 3 indicates a spherical bearing seat formed by molding a plastic material capable of providing a smooth or slippery surface, such as fluorocarbon resin. The bearing seat 3 includes a spherical concave having a depth slightly shorter than the radius of the spherical body, and the bearing seat 3 rotatably supports the spherical magnet 1. The reference numeral 4 indicates a bearing cap formed by molding fluorocarbon resin as in the bearing seat 3. The bearing cap 4 includes a spherical concave having a depth slightly longer than the radius of the spherical body or slightly getting across the equator of the spherical body 1. The spherical concave of the bearing cap 4 forms a spherical space corresponding to the spherical body 1 in combination with the spherical concave of the spherical bearing seat 3. The bearing cap 4 has a square-shaped top face and four sides each formed with a groove 41 at the middle region thereof. Since the bearing cap 4 is made of a plastic material, the elasticity of the plastic material allows a core of a molding die to be pulled out after molding. In assembling process, the bearing cap 4 can also be pushed down toward the spherical body 1 placed on the spherical bearing seat 3. Further, the grooves 41 having a thin bottom thickness and including an expanding slot 42 facilitates the above assembling operation. A pair of hall elements as magnetic sensors 5x, 5y are adhesively fixed at the bottoms of two grooves adjacent to each other among the four grooves in the bearing cap, respectively. This structure allows each of the hall elements to be disposed in non-contact manner with keeping a certain distance to the surface of the spherical body 1 and close to each other. Similarly, the spherical bearing seat 3 has four rectangular sides. A groove 31 is provided in the sides at a position corresponding to the hall elements 5x, 5y to serve as a passage for drawing out each lead wire of the hall elements. The spherical bearing seat 3 and bearing cap 4 may be jointed at each corner thereof with a screw. Alternatively, they may be joined with an adhesive or by engaging suitable engagement concave and convex portions. In the above manner, a base component of the joystick is completed. Then, the spherical bearing seat 3 is mounted on a suitable position in a circuit board 6, and each lead wire of the hall elements is connected to a printed circuit board.

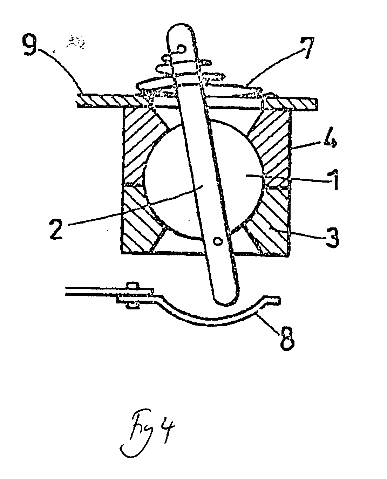

Fig. 4 shows an example in which a click function is incorporated into a joystick of the present invention. Elements or components corresponding to those of Fig. 3 will be defined by the same reference numerals. A lever 2 slidably penetrates a spherical body 1. The lever 2 is usually biased upward by a spring 7 interposed between a top plate 9 and a pin knocked in the upper portion of the lever 2. For a click operation, the lever 2 is pushed down. The lower end of the lever 2 is protruded downward from the spherical body 1, and is brought into contact with a conductive plate 8 disposed under the spherical body 1. The conductive plate 8 is formed to have a concave surface, and is conductively connected to one terminal of a circuit. The lever 2 is conducted with the top plate 9 through the spring 7, and thus the circuit is closed when the lower end of the lever 2 is brought into contact with the conductive plate 8. Alternatively, a magnet may be attached to the lower end of the lever 2 to close a proximity switch by pushing down the lever 2 without closing the circuit directly through the lever 2.

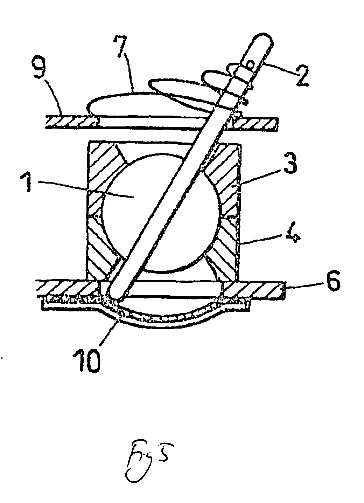

A joystick can be constructed as a three-dimensional operating device by detecting the vertical movement of the lever 2 and outputting the pushing-down force of the lever 2 as an analog signal. Such an example is shown in Fig. 5. Based on a similar structure to that of Fig. 4, a pressure-sensitive conductive rubber plate 10 is disposed under the lever. This rubber plate is connected in series with a resistor. The voltage at the junction between the resistor and the rubber plate 10 is changed in response to the magnitude of a pressure caused by pressing down the lever 2. This voltage is used as a third z-direction operation signal with respect to x-direction and y-direction operation signals.

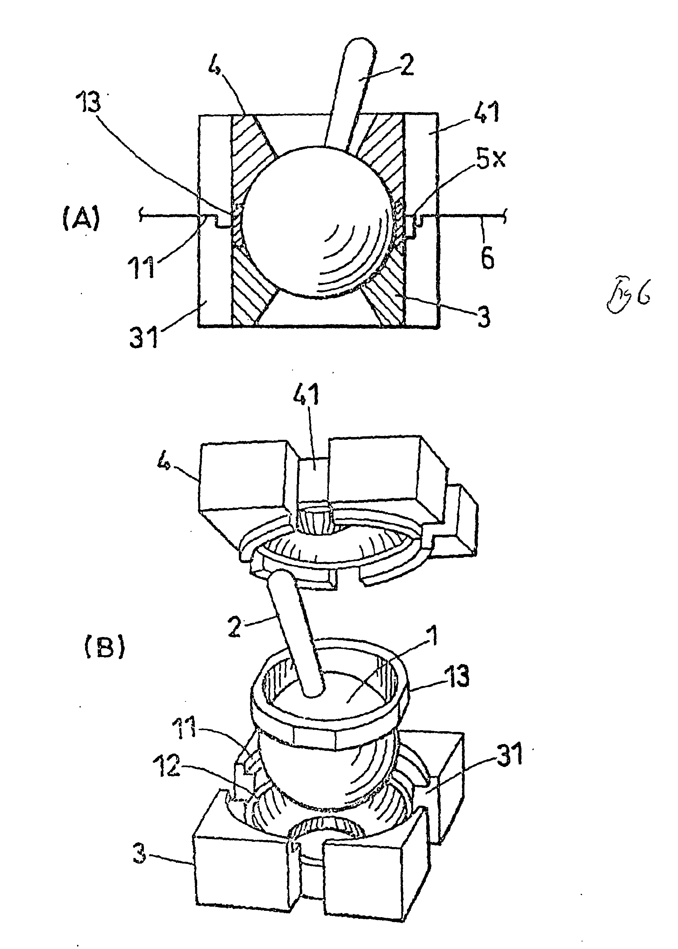

Fig. 6 shows a modification of the example of Fig. 3. In this modification, the spherical bearing seat 3 and the bearing cap 4 include a pair of steps 11 to be engaged with each other just on the equatorial plane of the spherical body 1, respectively. Further, a recessed portion 12 is formed in each inner surface of the spherical bearing seat 3 and the bearing cap 4 to allow a thin ring 13 made of fluorocarbon resin to be fitted thereinto. In addition, the grooves 31, 41 are formed in the outer surfaces of the spherical bearing seat and the bearing cap. The hall elements 5x, 5y are put in these groove portions, and the hall elements are brought pressingly into contact with the ring 13. Then, an adhesive material is injected in each of the grooves to fix each of the hall elements. The thickness of the ring 13 acts as a spacer for keeping the hall elements and the surface of the spherical body 1 in a close relationship with leaving a constant distance therebetween. When the spherical bearing seat 3 and the bearing cap 4 which are vertically arranged are engaged with each other, a flexible printed board 6 may be interposed therebetween.

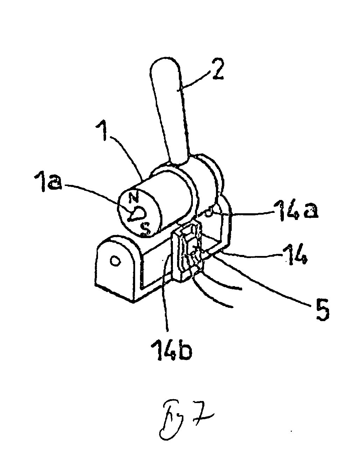

Fig. 7 shows an example in which the present invention is applied to a one-dimensional lever type operating device. The reference number 1 indicates a cylindrical magnetic body having a shaft 1a formed therein by an insert molding process. The cylindrical body 1 is magnetized in one of the diametrical directions thereof to form a magnet. The shaft 1a may be formed of either a magnetic material or a nonmagnetic material as long as the symmetric property of the magnetic field on the surface of the magnet is demolished by the shaft. A lever 2 includes a ring portion, and the magnet 1 is fitted into and fixed by the ring portion. The axial direction of the lever 2 is matched with the magnetizing direction of the magnet 1. The reference number 14 indicates a bracket for supporting the magnet 1 formed by molding a plastic material. The shaft 1a protruded from both ends of the magnet 1 is supported by pivot holes 14a which are formed in standing potions of both sides of the bracket, respectively.

For supporting the magnet 1, the standing portions of the bracket may be slightly expanded elastically to allow the magnet 1 to be pushed in the pivot holes. The bracket includes another standing portion 14b to which a hall element 5 is fixedly attached. The standing portion 14b is inclined slightly inward in its free state. Thus, when the magnet 1 is supported by the bracket 14, the standing portion 14b is brought elastically and gently into contact with the surface of the magnet 1. In this manner, this standing portion 14b can also acts as a spacer for keeping the distance between the hale element 5 and the surface of the magnet constant. The shaft 1a may be formed integrally with the magnet 1 by molding with the same material as that of the magnet 1.

In the above examples, the magnet is described as a spherical or cylindrical body. However, as apparent from the case of the spherical body, both magnetic pole regions are substantially flattened because the lever penetrates the spherical magnet. The influence of these flattened regions appears at the lever inclinations of zero degree and 180 degrees.

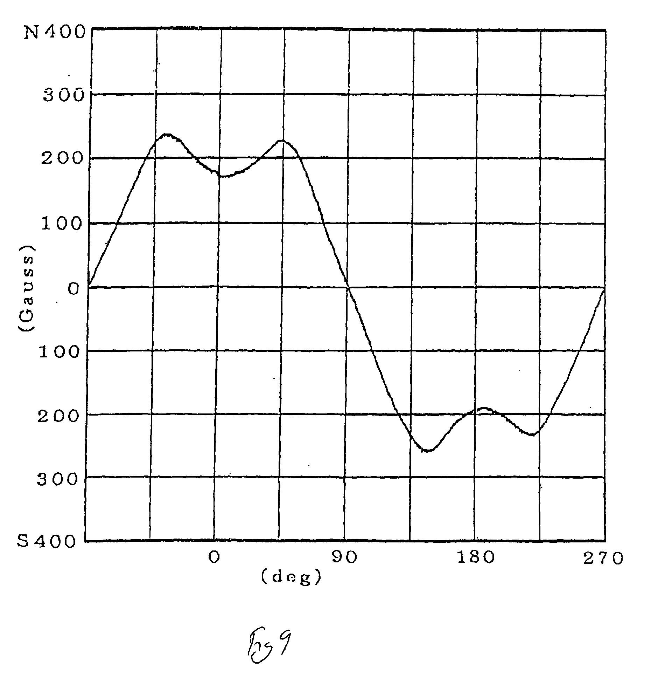

The present invention is based on the principle that the angle (latitude) dependence of magnetic field intensity is essentially point-symmetric with respect to 90 degrees, and the magnetic field intensity is linearly changed over a wide angle range on both sides of 90 degrees. Thus, both the magnetic pole regions may be widely flattened. Fig. 9 shows the relationship between the magnetic field intensity and the angle in case that both the magnetic pole regions of a spherical magnet are flattened and the distance between both the magnetic poles is set in 3/5 of the diameter of the spherical magnet. It is proved that a sufficient linearity can be maintained over a range of about 30 degrees on both sides of the point of 90 degrees while the width between two peaks in both the magnetic pole regions is increased.

The term "spherical" or "cylindrical" herein includes the case in which both the magnetic pole regions of a magnet are symmetrically flattened.

While the lever has been penetrated through the spherical body or cylindrical body in the magnetizing direction thereof in the above description, it is apparent that the lever may be attached with an appropriate inclination according to the need of device design. Particularly, when means for preventing the magnetic field from being disrupted by attaching the lever, such as adhesively fixing the lever on the surface of the magnet, or using another auxiliary component, is additionally used, the lever may be largely inclined with respect to both the magnetic poles of the magnet.

### INDUSTRIAL APPLICABILITY

In the present invention, a spherical or cylindrical magnetic body magnetized in one of the diametrical directions thereof is rotatably supported and a magnetic sensor is disposed close to the surface of the magnet to detect the intensity of the magnetic field component perpendicular to the surface of the magnet. Thus, the structure of the device is very simple with the reduced number of parts and the magnet can be readily produced. This facilitates downsizing of the device, and allows any electrical component involved with sliding movement to be eliminated so as to provide desirable durability. Further, smooth and linear change in magnetic intensity can be achieved to provide a high degree of accuracy. Accordingly, the present invention is applicable in various fields, such as an operating device for portable computers, an operating device for various machines, for example used in operating a crane, or remote-controlling a robot, or the like.

## Claims

1. A lever type operating device comprising:
a magnet including a spherical or cylindrical magnetic body magnetized in one of the diametrical directions thereof; and
an operating lever attached to said magnet, wherein
said magnet is rotatably supported so as to serve as a supporting point allowing said operating lever to be inclined, and
a magnetic sensor is dispose close to the surface of said magnet to provide an output as an operating signal.

2. A lever type operating device as defined in claim 1, wherein said spherical or cylindrical magnetized magnetic body has a cutout portion at both the magnetic pole regions thereof.

3. A lever type operating device as defined in claim 1 or 2, wherein said lever to be attached to said spherical or cylindrical magnetized magnetic body is attached to at least either one of the magnetic pole regions of said magnetic body.

4. A lever type operating device as defined in claim 1 or 2, wherein said lever to be attached to said spherical or cylindrical magnetized magnetic body is attached to any region other than the magnetic pole regions of said magnetic body.

5. A lever type operating device as defined in claim 1 or 2, wherein said lever to be attached to said spherical or cylindrical magnetized magnetic body is slidably fitted into a through-hole extending between both the magnetic pole regions of said magnetic body, wherein one of the ends of said lever is arranged to operate electrical switching means.
